# EUROPÄISCHE PATENTSCHRIFT

(11) **EP 2 414 780 B1**
(45) Veröffentlichungstag und Bekanntmachung des Hinweises auf die Patenterteilung: **25.11.2015**
(21) Anmeldenummer: 10711563.6
(22) Anmeldetag: 12.03.2010
(51) Int. Cl.: G01D 1/18, G01D 3/08, H02N 2/18

(54) **ÜBERWACHUNG EINER MIKROGENERATORSSCHALTUNG EINER DREHGEBERVORRICHTUNG**
MONITORING A MICROGENERATOR CIRCUIT OF A ROTARY ENCODER DEVICE
SURVEILLANCE D'UN CIRCUIT MICROGÉNÉRATEUR D'UN DISPOSITIF DE DÉTECTION TOURNANT

(30) Priorität: 31.03.2009 DE 102009015711
(43) Veröffentlichungstag der Anmeldung: 08.02.2012
(73) Patentinhaber: Baumer Innotec AG, 8500 Frauenfeld (CH)
(72) Erfinder: SCHNEIDER, Michael, 78462 Konstanz (DE); WILHELMY, Jochen, 91052 Erlangen (DE)
(74) Vertreter: Strauss, Steffen
(86) Internationale Anmeldenummer: PCT/EP2010/001595
(87) Internationale Veröffentlichungsnummer: WO 2010/112131

(56) Entgegenhaltungen:
- EP-A1- 0 723 161
- EP-A2- 1 942 315
- US-A- 5 493 214
- US-A- 6 052 634
- US-A1- 2005 017 602
- LOTHAR WILHELMY: "Ohne Getriebe und Batterie" INTERNET CITATION 26. Juli 2006 (2006-07-26), Seiten 1-4, XP007913445 Gefunden im Internet: URL:http://www.elektrotechnik.vogel.de/sen sorik/articles/49862/ [gefunden am 2010-06-14]

## Beschreibung

### Gebiet der Erfindung

Die vorliegende Erfindung betrifft eine Drehgebervorrichtung zur Abtastung einer drehbaren Welle, welche eine Mikrogeneratorschaltung umfasst, in der die kinetische Energie der Welle in eine elektrische Spannung umgewandelt wird und die durch eine Überwachungsschaltung überwacht wird.

### Hintergrund der Erfindung

Messvorrichtungen wie Drehgebervorrichtungen finden allgemein zur Überwachung und Steuerung mechanischer Bewegungsabläufe Anwendung. Beispielsweise werden Drehgeber für die Drehzahlerfassung und Steuerung von Motoren, Steuerung oder Regelung von Förderanlagen oder die Überwachung von Förderbändern eingesetzt.

Im Stand der Technik ist es bekannt, solche mit elektronischen Umdrehungszählem ausgestattete Drehgeber mit Hilfe von Generatoren sowie Mikrogeneratoren mit Energie zu versorgen.

Im Stand der Technik der Technik ist ein Mikrogenerator bekannt, der immer dann die Erzeugung eines elektrischen Impulses auslöst, wenn ein sich bewegender Körper eine vorgebbare Position erreicht, und der folgende Bestandteile umfasst: 1. einen Energiespeicher, der während der Annäherung des Körpers an die vorgebbare Position einen Teil der Bewegungsenergie des Körpers in Form potentieller Energie fortschreitend ansammelt und speichert und beim Erreichen der Position die gespeicherte potentielle Energie in Form kinetischer Energie schlagartig freisetzt, 2. eine Vorrichtung zum Umformen dieser kinetischen Energie in einen elektrischen Impuls, und 3. eine Verarbeitungseinrichtung, der der elektrische Impuls zugeführt wird.

Die Umwandlung der kinetischen Energie in einen elektrischen Impuls erfolgt auf induktivem Wege oder beispielsweise mithilfe piezoelektrischer Wandlerelemente.

Hierbei tritt das Problem auf, dass ein Ausfall der Drehgebervorrichtung oder eine Fehlfunktion auftreten kann. Wird die Schaltung von einer externen Spannung versorgt, kann die korrekte Funktion des Mikrogenerators nicht festgestellt werden. Liegt beispielsweise eine Beschädigung des Mikrogenerators, wie ein Drahtbruch in einer Spule des Mikrogenerators, vor, werden während des Betriebs die Umdrehungen dennoch korrekt gezählt. Wird der Antrieb, an den der Umdrehungszähler angebaut ist, ausgeschaltet, beispielsweise bei Nothalt mit Abschalten der externen Versorgungsspannung der Drehgebervorrichtung, und absolviert der Antrieb bis zum Stillstand einige Umdrehungen, so werden diese Umdrehungen bei Ausfall des Mikrogenerators nicht erkannt. Nach dem Wiedereinschalten liefert der Umdrehungszähler einen falschen Wert, ohne dass der Ausfall des Mikrogenerators festgestellt werden kann. Eine Schädigung der Anlage z.B. durch Auffahren auf eine Begrenzung, ist möglich. Das gilt auch für den Fall, dass eine weitere Komponente des Umdrehungszählers, wie ein nichtflüchtiger Speicher zum Speichern einer Positionsinformation und/oder ein Mikroprozessor zum Verarbeiten er Positionsinformation nicht korrekt arbeitet.

Es ist somit eine der vorliegenden Erfindung zugrunde liegende Aufgabe, eine Messvorrichtung, insbesondere eine Drehgebervorrichtung, zur Verfügung zu stellen, die eine erhöhte Zuverlässigkeit der Funktionsweise der Messvorrichtung aufweist.

### Beschreibung der Erfindung

Die oben genannte Aufgabe wird durch die Drehgebervorrichtung zur Abtastung einer drehbaren Welle gemäß Anspruch 1 gelöst, welche umfasst
eine Mikrogeneratorschaltung, die kinetische Energie der Welle in eine elektrische Spannung umwandelt, und
eine Überwachungsschaltung, die dazu ausgebildet ist, ein Fehlersignal auszugeben, das eine Fehlfunktion der Mikrogeneratorschaltung anzeigt, wenn die elektrische Spannung ein vorbestimmtes Kriterium bezüglich einer Referenzschwelle erfüllt.

Die elektrische Spannung kann insbesondere eine Gleichspannung sein, und es kann das vorbestimmte Kriterium darin bestehen, dass die Gleichspannung unterhalb einer Referenzgleichspannung liegt. Die elektrische Spannung kann auch eine Wechselspannung, insbesondere ein Spannungspuls sein, und in diesem Fall kann das vorbestimmte Kriterium darin bestehen, dass die Breite und/oder Höhe des Spannungspulses unterhalb einer vorbestimmten Schwelle liegt. Auch kann sich das Kriterium auf eine Schwelle beziehen, die über mehrere Spannungspulse integrierte Werte der Breite/Höhe der Spannungspulse zur Erfüllung des Kriteriums zu erfüllen haben. Im weiteren wird beispielhaft davon ausgegangen, dass die Mikrogeneratorschaltung kinetische Energie der Welle in eine elektrische Gleichspannung umwandelt.

Der Begriff der Welle umfasst hierin eine drehbare, rein mechanisch oder elektrisch antreibbare Achse und ebenso allgemein einen jeglichen drehbaren geradlinigen, krummlinigen oder helischen Voll- oder Hohlkörper, deren oder dessen Drehwinkel von der Drehgebervorrichtung erfasst wird. Die Welle kann beispielsweise eine Hohlwelle oder Vollwelle sein.

Der Begriff der Mikrogeneratorschaltung umfasst hierin einen Mikrogenerator und weitere geeignete Bauteile. Wie es im Stand der Technik bekannt ist, versorgt ein Mikrogenerator eine Drehgebervorrichtung mit Energie. Vorzugsweise werden in der Mikrogeneratorschaltung Spannungsimpulse des Mikrogenerators einen Brückengleichrichter durchlaufen und mit Hilfe eines Kondensators stabilisiert. Der Kondensator als Teil der Mikrogeneratorschaltung wird also typischerweise durch die Spannungsimpulse des Mikrogenerators aufgeladen und stellt typischerweise ein stabilisiertes Gleichspannungssignal zur Verfügung.

Der Begriff der Überwachungsschaltung umfasst hierbei eine elektronische Schaltung mit elektronischen Bauteilen und Schaltungskomponenten, beispielsweise mit Spannungsreglern, von denen jeder jeweils eine einstellbare Gleichspannung als Ausgangsspannung, liefern kann, ferner beispielsweise mit einem Mikroprozessor und einem nichtflüchtigen elektronischen Speichermedium, Ferner ist die Überwachungsschaltung geeignet, die von der Mikrogeneratorschaltung ausgegebenen Spannungssignale hinsichtlich einer Fehlfunktion der Mikrogeneratorschaltung zu bewerten.

Der Begriff der Referenzgleichspannung bezieht sich auf eine Schwellenspannung oder Mindest-Eingangsspannung (siehe unten). Wird diese Referenzgleichspannung, also die Schwellenspannung, unterschritten, so gibt die Überwachungsschaltung ein Fehlersignal aus, das auf eine Fehlfunktion des Mikrogenerators hinweist.

Durch die erfindungsgemäß vorgesehene Überwachungsschaltung wird somit die Mikrogeneratorschaltung auf effektive Weise überwacht. Insbesondere kann ein Ausfall der Mikrogeneratorschaltung zuverlässig erkannt werden, wodurch die Verlässlichkeit der von der Drehgebervorrichtung bereitgestellten Information über die Drehung der Welle gegenüber dem Stand der Technik signifikant erhöht wird.

Weiterhin kann die Überwachungsschaltung der Drehgebervorrichtung einen ersten Spannungsregler umfassen, der basierend auf der von der Mikrogeneratorschaltung gelieferten Gleichspannung eine Ausgangsspannung, U_{A}, bereitstellt. Hierbei wird die Gleichspannung aus der Mikrogeneratorschaltung, die vorzugsweise noch von dem Kondensator stabilisiert wird, an den Eingang des ersten Spannungsreglers geliefert. Dieser wird eine Ausgangsspannung, U_{A}, dann bereitstellen, wenn an einem Eingang des Spannungsreglers eine Gleichspannung anliegt, die größer oder gleich der Referenzgleichspannung U_{R} ist. Dabei kann die Referenzgleichspannung vorzugsweise selbst so gewählt werden, dass die Referenzgleichspannung, d.h. die Schwellenspannung oder Mindest-Eingangsspannung, größer oder gleich der vom Spannungsregler bereitgestellten Ausgangsspannung U_{A} ist. Es ist weiterhin vorteilhaft, wenn die Ausgangspannung des ersten Spannungsreglers, U_{A}, ebenfalls vorzugsweise geeignet wählbar ist.

Eine Fehlerbestimmung bezüglich der Funktion der Mikrogeneratorschaltung kann also mit der Überwachungsschaltung und darin insbesondere mit Hilfe des ersten Spannungsreglers in der Weise zuverlässig realisiert werden, dass der erste Spannungsregler nur dann die Ausgangsspannung U_{A} liefert, wenn an dem Eingang des ersten Spannungsreglers eine hinreichende Gleichspannung anliegt.

Gemäß einer weiteren Weiterbildung umfasst die erfindungsgemäße Drehgebervorrichtung einen zweiten Spannungsregler der dazu ausgebildet ist, an die Überwachungsschaltung eine Gleichspannung zu liefern, und worin die Überwachungsschaltung weiterhin dazu ausgebildet ist, das Fehlersignal basierend auf einer Eingangsspannung U_{E}, die von der vom zweiten Spannungsregler gelieferten Spannung und der von der Mikrogeneratorschaltung gelieferten Spannung abhängt, auszugeben.

Weiterhin kann die vom zweiten Spannungsregler gelieferte Gleichspannung, d.h. die Ausgangsspannung, U_{A2}, über ein Bauelement, vorzugsweise eine Diode, abfallen, wobei ein Spannungsabfall, U_{D}, auftritt, so dass eine resultierende Gleichspannung, U_{A2} -U_{D} = U_{E}, an die Überwachungsschaltung geliefert wird.

Weiterhin kann zweckmäßigerweise die resultierende Gleichspannung, U_{A2} - U_{D}, welche an die Überwachungsschaltung geliefert wird, kleiner als die Referenzgleichspannung, U_{R}, des ersten Spannungsreglers sein..

Durch den zweiten Spannungsregler wird beispielsweise eine Gleichspannung, die Ausgangsspannung U_{A2}, geliefert und zur Versorgung der Überwachungsschaltung bereitgestellt. Wie schon bei dem ersten Spannungsregler kann die Gleichspannung U_{A2} vorzugsweise geeignet gewählt werden. Nach einem Spannungsabfall, U_{D}, über ein geeignetes Bauteil, etwa eine Diode, beträgt die resultierende Gleichspannung U_{A2} - U_{D} = U_{E}. Durch geeignete Wahl der Ausgangsspannung U_{A2} und dem Spannungsabfall U_{D} liegt die resultierende Gleichspannung zweckmäßigerweise unter der Referenzgleichspannung, U_{R}, für den ersten Spannungsregler, also U_{E} < U_{R}. Die Ausgangsspannung des ersten Spannungsreglers, U_{A}, ist gleich U_{E}, wenn U_{E} kleiner als U_{R} ist. Die resultierende Gleichspannung U_{A2} - U_{D} kann als eine Sockelgleichspannung betrachtet werden, die mindestens zur Versorgung der Überwachungsschaltung zur Verfügung steht, unabhängig von der von der Mikrogeneratorschaltung zur Verfügung gestellten Gleichspannung. Die resultierende Gleichspannung steht insbesondere auch dann zur Versorgung zur Verfügung, wenn die Mikrogeneratorschaltung keine oder eine zu geringe Spannung liefert, zum Beispiel wenn sich die Welle nicht dreht, oder beispielsweise im Ruhezustand der Mikrogeneratorschaltung, oder bei einem Drahtbruch innerhalb der Mikrogeneratorschaltung oder sonstigen elektrischen oder mechanischen Defekten der Mikrogeneratorschaltung. Die am Eingang des ersten Spannungsreglers anliegende Eingangsspannung, U_{E}, setzt sich beispielsweise aus zwei Anteilen zusammen. Sie ist also zweckmäßigerweise die Gleichrichtung der vom zweiten Spannungsregler gelieferten Gleichspannung und der von der Mikrogeneratorschaltung gelieferten Gleichspannung. Der Anteil der Eingangsspannung, der vom zweiten Spannungsregler als Sockelgleichspannung, d.h. als die resultierende Gleichspannung, geliefert wird, ist allein nicht ausreichend, um die Referenzgleichspannung U_{R} des ersten Spannungsreglers zu überschreiten. Es bedarf also zusätzlich der von der Mikrogeneratorschaltung gelieferten Gleichspannung, damit die Eingangsspannung die Referenzgleichspannung überschreitet. In diesem Fall ist U_{A} gleich U_{R}.

In dieser Weiterbildung kann also insbesondere die fehlerfreie Funktion der Mikrogeneratorschaltung bei gleichzeitiger externer Energieversorgung der Drehgebervorrichtung permanent und in definierter Weise kontrolliert werden.

Des Weiteren kann die Überwachungsschaltung einen Mikroprozessor und ein nichtflüchtiges elektronisches Speichermedium, insbesondere ein FeRAM, umfassen, wobei der Mikroprozessor dazu ausgebildet ist, einen Zählerstand basierend auf der Detektion der Drehung der Welle zu bestimmen, und das nichtflüchtige elektronische Speichermedium dazu ausgebildet ist, den Zählerstand zu speichern, wobei
die Überwachungsschaltung ferner eine Steuerleitung und eine Schreibzugriffsperre für das nichtflüchtige elektronische Speichermedium umfasst und dazu ausgebildet ist, die Schreibzugriffsperre über die Steuerleitung für ein Schreiben von Daten auf das nichtflüchtige elektronische Speichermedium nur dann frei zu schalten, wenn am Eingang des ersten Spannungsreglers die Eingangsspannung, U_{E}, größer als die Referenzgleichspannung anliegt, und worin
die Überwachungsschaltung dazu ausgebildet ist, die aktuelle Winkelposition mit dem Zählerstand aus dem nichtflüchtigen elektronischen Speichermedium zu vergleichen und ein Fehlersignal auszugeben, wenn die Differenz größer als ein vorbestimmter Schwellenwert ist.

Die Überwachungsschaltung der Drehgebervorrichtung wird eine Fehlfunktion des Mikrogenerators beispielsweise dadurch erkennen, dass die Differenz zwischen dem ersten und zweiten Zählerstand, mindestens 2 beträgt. Der Schwellenwert wird also vorzugsweise als 2 gewählt.

Ein nichtflüchtiges elektronisches Speichermedium ermöglicht ein erneutes Einlesen, Zurücklesen oder mehrmaliges Lesen von Informationen und Daten, insbesondere von Zählerständen oder Zählerwerten, aus oder von dem nichtflüchtigen elektronischen Speichermedium. Dieses kann beispielsweise notwendig sein, wenn die Drehgebervorrichtung regulär abgeschaltet wurde und dann erneut angefahren wird oder wenn ein Fehlerzustand eingetreten ist. Eine Schreibzugriffsperre kontrolliert typischerweise ob und wann ein Schreiben von Daten auf das nichtflüchtige elektronische Speichermedium erfolgen soll. Dieser Schreibzugriff kann insbesondere dann verhindert werden, wenn die Eingangsspannung, U_{E}, am ersten Spannungsregler kleiner als die Referenzgleichspannung ist. Vorzugsweise sind Lesezugriffe auf das nichtflüchtige elektronische Speichermedium, also das Lesen von dem nichtflüchtigen elektronischen Speichermedium, wie sie typischerweise der Mikroprozessor anweisen kann, nicht von der Schreibzugriffsperre und insbesondere nicht von dem aktuellen Zustand der Schreibzugriffsperre, d.h. ob ein Schreibzugriff gerade erlaubt ist oder nicht, abhängig.

In einer hinzukommenden Weiterbildung kann die Überwachungsschaltung dazu ausgebildet sein, die ordnungsgemäße Abarbeitung des Programms des Mikroprozessors zu überwachen, indem der Mikroprozessor vorzugsweise dazu ausgebildet ist, einen Zählschritt pro Vierteldrehung der Welle, Quadrant, zu zählen und im nichtflüchtigen elektronischen Speichermedium abzulegen und für den aktuellen Quadranten zu registrieren, ob ein gültiger Zählschritt erfolgt ist, indem während der gesamten Dauer der Bestimmung des Zählerstandes geprüft wird, insbesondere die durch den Kondensator der Mikrogeneratorschaltung stabilisierte Eingangsspannung, U_{E}, größer als die Referenzgleichspannung, U_{R}, ist, und weiterhin vor jedem neuen Zählschritt zu überprüfen, ob im vorherigen Quadranten ein gültiger Zählschritt stattgefunden hat, und ein Fehlersignal auszugeben, wenn der vorangegangene Zählschritt nicht gültig war.

Hierbei kann vorzugsweise der Kondensator eine stabilisierte Eingangspannung, U_{E}, insbesondere eine zeitlich stabilisierte Eingangsspannung gewähren.

Um die ordnungsgemäße Abarbeitung des Programms des Mikroprozessors geeignet zu überwachen, kann es sich ferner als vorteilhaft erweisen, bei der Entscheidung, ob ein Zählschritt als gültig registriert wird, eine gewisse Toleranz vorzusehen. Zur Erhöhung dieser Toleranz vor der Registrierung eines gültigen Zählschritts kann der Mikroprozessor deshalb beispielsweise eine Warteschleife ausführen, während der geprüft wird, ob weiterhin über die Steuerleitung signalisiert wird, dass die Eingangsspannung, U_{E}, des ersten Spannungszählers größer als die Referenzgleichspannung ist. Dieses kann auch so betrachtet werden, dass während der gesamten Zeit, die der Mikroprozessor für die Abarbeitung seines Programms benötigt, ein genügend hohes Gleichspannungssignal von der Mikrogeneratorschaltung geliefert wird.

Weiterhin kann die Überwachungsschaltung der Drehgebervorrichtung vorzugsweise für einen weiteren Funktionstest eines ihrer Elemente ausgebildet sein, nämlich die Überprüfung oder Überwachung der einwandfreien Arbeitsweise des nichtflüchtigen elektronischen Speichermediums. Diese Überwachung gelingt der dazu ausgebildeten Überwachungsschaltung zum Beispiel, indem nach der Speicherung des ersten Zählerstandes der Speicherinhalt des nichtflüchtigen elektronischen Speichermediums wieder zurück gelesen wird und mit dem Zählerstand im Mikroprozessor verglichen wird und eine Fehlfunktion des nichtflüchtigen elektronischen Speichermediums ausgegeben wird, sofern es eine Abweichung zwischen dem im Mikroprozessor vorhandenen Zählerstand und dem wieder zurück gelesenen Zählerstand gibt.

Mit Hilfe dieser Überprüfung können folglich bei besonders kritischen Anwendungen zusätzlich noch Fehler beim Speichern in das respektive Zurücklesen von dem nichtflüchtigen elektronischen Speichermedium erkannt werden.

In einer weiteren Weiterbildung umfasst die erfindungsgemäße Drehgebervorrichtung einen Mikrogenerator, der ein Piezoelement umfasst, das ein Plättchen umfasst, das derart angeordnet ist, dass bei der Drehung der Welle eine mechanische Kraft auf das Plättchen ausgeübt wird, so dass dieses eine Verformung erleidet.

Das Piezoelement ist ein Bauteil, das mithilfe des wohl bekannten Piezoeffekts bei Einwirkung einer mechanischen Kraft eine elektrische Spannung (ein Spannungssignal) zu erzeugen vermag. Es kann als Piezokristall oder in Form eines piezoelektrischen keramischen Materials, beispielsweise Blei-Zirkonat-Titanat, realisiert sein. Das Piezoelement kann ein Plättchen aus einem Piezokristall oder einem piezoelektrischen keramischen Material sein, an dem Elektroden angebracht sind, an denen eine Spannung entsteht durch ein elektrisches Feld, das durch das Aufbringen einer mechanischen Kraft auf das Plättchen durch den Piezoeffekt erzeugt wird. Des weiteren kann das Piezoelement prinzipiell als piezoelektrisches Röhrchen oder als Bimorph realisiert sein.

Durch die Verwendung eines Piezoelements kann kontinuierlich eine Energieversorgung des Drehgebers erreicht werden. Insbesondere erfolgt im Betrieb kein Entladen dieser piezoelektrischen Energiequelle, wie es bei einer einmal aufgeladenen und sodann verwendeten Batterie der Fall ist. Zudem ist die Energieversorgung über ein Piezoelement einfach und kostengünstig bei hoher Zuverlässigkeit der Energieversorgung zu erreichen, indem die Bewegungsenergie der zu messenden Welle selbst verwendet und über das Piezoelement in elektrisch gewandelter Form genutzt wird.

Die erfindungsgemäße Drehgebervorrichtung kann darüber hinaus ein Piezoelement mit einem Plättchen (insbesondere aus einem Piezokristall oder einem piezoelektrischen keramischen Material bestehend) aufweisen, das derart angeordnet ist, dass bei der Drehung der Welle eine mechanische Kraft auf das Plättchen ausgeübt wird, so dass dieses eine Verformung erleidet, die durch den piezoelektrischen Effekt in eine Spannung umgewandelt wird, die beispielsweise über an dem Plättchen angebrachten Elektroden abgegriffen und zur Versorgung der Drehgebervorrichtung werden kann. Das Plättchen kann vorteilhafterweise auf einem Träger, beispielsweise einem Trägerplättchen, angebracht sein. Mithilfe des Plättchens ist eine besonders einfache und kostengünstige Realisierung der Energieversorgung über ein Piezoelement möglich.

Beispielsweise kann die Drehgebervorrichtung ein Mitnahmeelement umfassen, das mit der Welle in Verbindung steht und derart angeordnet ist, dass es bei jeder vollständigen Umdrehung der Welle das Plättchen auslenkt. Diese Auslenkung kann dadurch erfolgen, dass das Mitnahmeelement in direkten mechanischen Kontakt mit einem Träger(plättchen) gerät, auf dem das Plättchen angebracht ist, so dass eine mechanische Kraft von dem Mitnahmeelement über den Träger auf das Plättchen ausgeübt wird. Insbesondere kann das Mitnahmeelement direkt an der Welle befestigt sein.

Es versteht sich, dass die erfindungsgemäße Überwachung einer Mikrogeneratorschaltung entsprechend obiger Beschreibung auch allgemein für eine Messvorrichtung Anwendung finden kann. Somit wird weiterhin bereitgestellt:
eine Messvorrichtung zur Ermittlung der Position und/oder des Drehwinkels eines Körpers der eine Translations- und/oder Rotationsbewegung ausführt;
eine Mikrogeneratorschaltung, die kinetische Energie des Körpers in eine elektrische Spannung, insbesondere eine Gleichspannung, umwandelt, und
eine Überwachungsschaltung, die dazu ausgebildet ist, ein Fehlersignal auszugeben, das eine Fehlfunktion der Mikrogeneratorschaltung anzeigt, wenn die elektrische

Spannung ein vorbestimmtes Kriterium bezüglich einer Referenzschwelle erfüllt, insbesondere die Gleichspannung unterhalb einer Referenzgleichspannung liegt.

Insbesondere kann die Messvorrichtung die oben beschriebenen Merkmale der erfindungsgemäßen Drehgebervorrichtung aufweisen.

Ferner wird ein Verfahren zur Überwachung einer Mikrogeneratorschaltung einer Drehgebervorrichtung mit den Schritten zur Verfügung gestellt:
Ausgeben eines elektrischen Spannungssignals, insbesondere eines Gleichspannungssignals, durch die Mikrogeneratorschaltung,
Auswerten des elektrischen Spannungssignals, insbesondere des Gleichspannungssignals, und

Ausgeben eines Fehlersignals, das eine Fehlfunktion der Mikrogeneratorschaltung anzeigt, wenn die elektrische Spannung ein vorbestimmtes Kriterium bezüglich einer Referenzschwelle erfüllt, insbesondere wenn die Gleichspannung unterhalb einer Referenzgleichspannung liegt.

Weitere Merkmale und Vorteile der vorliegenden Erfindung werden im Weiteren mit Bezug auf die Zeichnung beschrieben, die lediglich eine beispielhafte Ausführungsform veranschaulicht und durchaus nicht den gesamten Umfang der Erfindung darstellt. Es versteht sich, dass die gezeigten Merkmale in anderen Kombinationen, als in dem Beispielen beschrieben, im Rahmen der Erfindung Verwendung finden können.

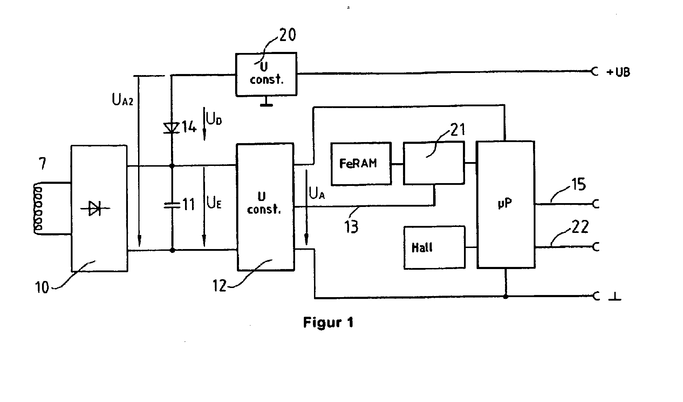

Figur 1 illustriert Komponenten einer erfindungsgemäßen Drehgebervorrichtung.

Eine Mikrogeneratorschaltung mit einem Mikrogenerator wird in einem Beispiel von einer Überwachungsschaltung überwacht, wie es in Figur 1 gezeigt wird. Der Mikrogenerator kann beispielsweise ein solcher sein, wie er aus der DE 103 55 859 oder der DE 43 42 069 bekannt ist. Insbesondere kann der Mikrogenerator ein Piezoelement aufweisen, wie es in der deutschen Patentanmeldung mit dem Anmeldeaktenzeichen 102008062849.2 offenbart ist. Die induktiv in einer Spule (7) generierten Spannungsimpulse durchlaufen einen Brückengleichrichter (10), werden in einem Kondensator (11) zwischengespeichert und von einem ersten Spannungsregler (12) auf die Ausgangsspannung U_{A} stabilisiert. Wenn die Spannung U_{E} am Eingang des ersten Spannungsreglers (12) U_{A} übersteigt, meldet dieser über eine Steuerleitung (13) einem Mikroprozessor (µP), dass seine Versorgungsspannung ordnungsgemäß ist. Ist dies der Fall, erhält der Mikroprozessor die Freigabe, mit Hall-Sensoren und einem nicht-flüchtigen Speicher (FeRAM) zu kommunizieren.

Der Mikrogenerator liefert bei allen Drehzahlen und Drehrichtungswechseln Spannungsimpulse, auch im Normalfall, wenn der Umdrehungszähler der Drehgebervorrichtung über eine Diode (14) vom Netz ständig mit Energie versorgt wird. In diesem Fall arbeitet der Mikroprozessor ununterbrochen weiter und durchläuft immer wieder seinen Verarbeitungszyklus, bis Hall-Sensoren eine Änderung der Wellenposition melden. Bei einem kurzfristigen Ausfall der äußeren Versorgungsspannung stehen unterbrechungsfrei die Spannungsimpulse des Mikrogenerators zur Verfügung. Dies gewährleistet eine außerordentlich hohe Zuverlässigkeit. Die in einem nichtflüchtigen Speichermedium, vorzugsweise einem FeRAM, gespeicherten Umdrehungen können an einem Ausgang (15) des Prozessors zur Weiterverarbeitung abgerufen werden.

Im Normalbetrieb liefert gemäß diesem Beispiel der Erfindung für den Fall, dass die Überwachungsschaltung mit Fremdenergie versorgt wird, ein zusätzlicher zweiter Spannungsregler (20) (siehe Figur 1) eine Spannung, U_{A2}, die nach der Diode (14) einen Spannungsabfall, U_{D}, erlitten hat. In diesem Fall gilt U_{E} = U_{A2} - U_{D} < U_{A}, womit die Mindest-Eingangsspannung U_{E} = U_{A} des ersten (Low-drop) Spannungsreglers (12) unterschritten wird. Arbeitet der Mikrogenerator einwandfrei, liefert er an den Eingang des ersten Spannungsreglers (12) einen Spannungsimpuls U_{E} > U_{A} und der Spannungsregler (12) gibt, solange der Spannungsimpuls anliegt, über die Steuerleitung (13) eine Schreibzugriffssperre (21) frei.

Fällt der Mikrogenerator aus, steht am Eingang des Spannungsreglers (12) nur die Spannung U_{E} = U_{A2} - U_{D} < U_{A} zur Verfügung. Diese ist kleiner als die Mindest-Eingangsspannung des Spannungsreglers (12). Der Spannungsregler (12) signalisiert auf der Steuerleitung (13) eine zu niedrige Spannung an die Schreibzugriffssperre (21), die daraufhin ein Aktualisieren des Zählerstandes im FeRAM verhindert. Dieser Fall tritt nicht nur bei Drahtbruch der Mikrogeneratorspule (7), sondern auch dann ein, wenn sich die Welle nicht dreht oder im Ruhezustand der Feder zwischen zwei Spannungsimpulsen. Auf diese Weise wird eine zusätzliche Sicherheit erzielt, denn der Mikroprozessor kann nur zu genauen, vom Mikrogenerator definierten Zeitpunkten auf das FeRAM zugreifen. Der Zählerstand im Mikroprozessor (µP) selbst ist jedoch nicht von der Schreibzugriffsperre abhängig, er kann weiterhin über den Ausgang (15) abgefragt werden.

Bei einwandfreier Funktion der Mikrogeneratorschaltung werden bei rotierender Welle an bestimmten Winkelpositionen vom Mikrogenerator der Mikrogeneratorschaltung Spannungsimpulse geliefert. Die Spannungsimpulse übersteigen die Mindesteingangsspannung des ersten Spannungsreglers (12) und schalten somit die Schreibzugriffsperre (21) über die Steuerleitung (13) kurzzeitig frei. Der vom Mikroprozessor neu berechnete Zählerstand kann jetzt im nichtflüchtigen Speicher abgelegt werden.

Fällt die Mikrogeneratorschaltung aus, fällt also insbesondere der Mikrogenerator aus, und wird infolgedessen ein Aktualisieren des Zählerstandes im FeRAM verhindert, baut sich somit eine Differenz zum aktuellen Zählerstand im Mikroprozessor (µP) auf. Ist die Differenz mindestens 2, ist dies ein sicherer Hinweis darauf, dass ein Impuls der Mikrogeneratorschaltung, also insbesondere ein Impuls des Mikrogenerators, nicht stattgefunden hat. In diesem Fall wird über einen Fehlerausgang (22) ein Fehler signalisiert, unabhängig davon funktioniert jedoch die Abfrage des im Mikroprozessor (µP) aktualisierten Zählerstandes über den Ausgang (15) weiterhin.

Es hat sich ferner herausgestellt, dass es vorteilhaft sein kann, nicht nur das Vorhandensein eines Spannungsimpulses des Mikrogenerators zu überwachen (also den möglichen Totalausfall der Mikrogeneratorschaltung), sondern dass die Höhe des im Kondensator (11) gespeicherten Spannungsimpulses und damit verbunden die Dauer, über die der Kondensator (11) eine ausreichende Spannung an den Eingang des ersten Spannungsreglers (12) liefern kann, ebenfalls von großer Bedeutung für das einwandfreie Arbeiten der Überwachungsschaltung und insbesondere der Zähloperation ist.

Fremdfelder können nämlich den Mikrogenerator soweit beeinflussen, dass der gelieferte Spannungsimpuls zu klein ist, den Kondensator ausreichend aufzuladen, um die elektronische Schaltung genügend lange mit Energie zu versorgen, bis die Zähloperation der Überwachungsschaltung ordnungsgemäß abgeschlossen ist.

Ein Lösungsansatz kann darin bestehen, die Höhe des Spannungsimpulses zu messen. Wird hierzu ein Komparator verwendet, der die Spannung am Kondensator (11) misst, so wird der Mikrogenerator zusätzlich belastet. Entweder, weil er direkt vom Mikrogenerator mitversorgt wird, oder weil über Schutzdioden des Komparators Strom in eine Fremdversorgungsleitung fließt, wenn diese stromlos ist.

Wird in einer alternativen, Lösung ein Analog-Digital-Wandler, AD-Wandler, der Bestandteil des Mikroprozessors sein kann, zur Spannungsmessung herangezogen, so muss die Spannung am Kondensator (11) mit einem Spannungsteiler herabgesetzt werden, da sonst die Eingangsspannung am AD-Wandler über der Versorgungsspannung des Mikroprozessors (µP) liegen würde. Damit ein solcher Spannungsteiler den Mikrogenerator nicht nennenswert belastet, muss er hochohmig sein, was aber eine erhöhte Gefahr gegenüber äußeren Störeinflüssen zur Folge hat.

Eine weitere Lösung kann darin bestehen, dass der Mikroprozessor selbst überwacht, ob er in der Zeit, in der eine ausreichende Spannung über die Steuerleitung (13) signalisiert wird, sein Programm ordnungsgemäß abarbeiten kann. Diese Aufgabe wird dadurch gelöst, dass der Mikroprozessor (µP) einen Zählschritt pro Quadrant erfasst und im nichtflüchtigen Speicher ablegt. Der Mikroprozessor (µP) bewertet also den aktuellen Zählschritt typischerweise dann als gültig, wenn er sein Programm, d.h. sämtliche Schritte, die mit der Zähloperation verbunden sind, korrekt abarbeiten kann. Das Ergebnis dieser Bewertung wird also zusätzlich registriert. Das kann typischerweise in einem im Mikroprozessor (µP) integrierten flüchtigen Speicher erfolgen. Vor jedem neuen Zählschritt überprüft der Mikroprozessor nun anhand der im flüchtigen Speicher abgelegten information, ob im vorherigen Quadranten ein gültiger Zählschritt erfasst wurde. Ist dies wegen zu kurzem Spannungssignals nicht der Fall, ist der Mikroprozessor (µP) also vor Abschluss seines Programms unterbrochen worden, wird dies vom Mikroprozessor (µP) erkannt und als Fehler ausgegeben.

Um die Sicherheit im Hinblick auf Toleranzen, Temperatur- und Alterungseinflüsse zu erhöhen, führt der Mikroprozessor (µP), vor der Anerkennung eines gültigen Zählschrittes, zur zeitlichen Verlängerung der Dauer eine Warteschleife aus und prüft, ob weiterhin eine ausreichende Spannung an der Steuerleitung (13) signalisiert wird.

Eine weitere Sicherheitsmaßnahme zur Überwachung der Überwachungsschaltung selbst besteht darin, den nichtflüchtigen Speicher (FeRAM) in seiner einwandfreien Arbeitsweise zu überwachen. Dies wir dadurch erreicht, dass nach der Speicherung eines neuen Zählschrittes der Speicherinhalt sofort wieder ausgelesen und mit dem Wert im Mikroprozessor (µP) verglichen wird. Abweichungen sind als fehlerhaftes FeRAM zu werten und werden als Fehler ausgegeben.

Um eine weitere Redundanz bei den Sicherheitsmaßnahmen zur Überwachung zu erzielen, kann eine Übereinstimmung von Messwerten eines Singleturn-Prozessors, dem ständig die aktuelle Position der Welle innerhalb einer Umdrehung zur Verfügung steht, mit denen des Mikroprozessors (µP) innerhalb jedes Quadranten überprüft werden. Dabei ist eine Toleranz von +/- einem Quadranten zulässig, da eine absolute Übereinstimmung des Überganges von einem zum nächsten Quadranten bei dem Singleturn-Prozessor und dem Mikroprozessor (µP) nicht erreichbar ist. Spätestens bei Ablauf einer halben Umdrehung (also zwei Quadranten) würde ein Fehler erkannt werden.

## Patentansprüche

1. Messvorrichtung zur Ermittlung der Position und / oder des Drehwinkels eines Körpers der eine Translations- und / oder Rotationsbewegung ausführt; umfassend eine Mikrogeneratorschaltung (7, 10, 11), die kinetische Energie des Körpers in eine Gleichspannung umwandelt und eine Überwachungsschaltung, die dazu ausgebildet ist, ein Fehlersignal auszugeben, das eine Fehlfunktion der Mikrogeneratorschaltung (7, 10, 11) anzeigt, wenn die Gleichspannung unterhalb einer Referenzgleichspannung liegt.

2. Messvorrichtung nach Anspruch 1, **dadurch gekennzeichnet, dass** die Überwachungsschaltung einen ersten Spannungsregler (12) umfasst, der basierend auf der Gleichspannung eine Ausgangsspannung, U_{A}, bereitstellt.

3. Messvorrichtung nach Anspruch 2, **dadurch gekennzeichnet, dass** ein zweiter Spannungsregler (20) vorgesehen ist, der dazu ausgebildet ist, an die Überwachungsschaltung eine Gleichspannung zu liefern, wobei die Überwachungsschaltung weiterhin dazu ausgebildet ist, das Fehlersignal, basierend auf einer Eingangsspannung, U_{E}, die von der vom zweiten Spannungsregler (20) gelieferten Spannung und der von der Mikrogeneratorschaltung (7, 10, 11) gelieferten Spannung abhängt, auszugeben.

4. Messvorrichtung nach Anspruch 3, **dadurch gekennzeichnet, dass** eine von dem zweiten Spannungsregler gelieferte Ausgangsspannung, U_{A2}, über ein Bauelement (14), vorzugsweise eine Diode, abfällt, wobei ein Spannungsabfall, U_{D}, auftritt, so dass eine resultierende Gleichspannung, U_{A2} -U_{D}, an die Überwachungsschaltung geliefert wird.

5. Messvorrichtung nach Anspruch 4, **dadurch gekennzeichnet, dass** die Ausgangsspannung, U_{A2}, des zweiten Spannungsreglers (20) größer als die Referenzgleichspannung des ersten Spannungsreglers (12) ist, und worin die resultierende Gleichspannung, U_{A2} - U_{D}, die an die Überwachungsschaltung geliefert wird, kleiner als die Referenzgleichspannung des ersten Spannungsreglers (12) ist.

6. Messvorrichtung nach einem der vorstehenden Ansprüche, **dadurch gekennzeichnet, dass** die Überwachungsschaltung weiterhin einen Mikroprozessor (µP) und ein nichtflüchtiges elektronisches Speichermedium (FeRAM) umfasst, wobei der Mikroprozessor (µP) dazu ausgebildet ist, einen Zählerstand basierend auf der Detektion der Drehung der Welle zu bestimmen, und das nichtflüchtige elektronische Speichermedium (FeRAM) dazu ausgebildet ist, den Zählerstand zu speichern, worin die Überwachungsschaltung ferner eine Steuerleitung (13) und eine Schreibzugriffsperre (21) für das nichtflüchtige elektronische Speichermedium (FeRAM) umfasst und dazu ausgebildet ist, die Schreibzugriffsperre (21) über die Steuerleitung (13) für ein Schreiben von Daten auf das nichtflüchtige elektronische Speichermedium (FeRAM) nur dann frei zu schalten, wenn am Eingang des ersten Spannungsreglers (12) die Eingangsspannung, U_{E}, größer als die Referenzgleichspannung ist, worin die Überwachungsschaltung dazu ausgebildet ist, eine Differenz zwischen der aktuellen Winkelposition und dem Zählerstand zu berechnen und ein Fehlersignal auszugeben, wenn die Differenz größer als ein vorbestimmter Schwellenwert ist.

7. Messvorrichtung nach Anspruch 6, **dadurch gekennzeichnet, dass** eine Fehlfunktion der Mikrogeneratorsschaltung dadurch erkannt wird, dass die Differenz zwischen der Winkelposition und dem Zählerstand mindestens 2 beträgt.

8. Messvorrichtung nach einem der vorhergehenden Ansprüche, **dadurch gekennzeichnet, dass** die Mikrogeneratorschaltung (7, 10, 11) einen Kondensator (11) zum Stabilisieren der Gleichspannung umfasst.

9. Messvorrichtung nach Anspruch 7, **dadurch gekennzeichnet, dass** die Überwachungsschaltung dazu ausgebildet ist, die ordnungsgemäße Abarbeitung des Programms des Mikroprozessors (µP) zu überwachen, indem der Mikroprozessor (µP) dazu ausgebildet ist, einen Zählschritt pro Vierteldrehung der Welle, Quadrant, zu zählen und im nichtflüchtigen elektronischen Speichermedium (FeRAM) abzulegen und für den aktuellen Quadranten zu registrieren, ob ein gültiger Zählschritt erfolgt ist, indem während der gesamten Dauer der Bestimmung des Zählerstandes geprüft wird, ob die Eingangsspannung, U_{E}, des ersten Spannungsreglers (12), größer als die Referenzgleichspannung ist, und weiterhin vor jedem neuen Zählschritt zu überprüfen, ob im vorherigen Quadranten ein gültiger Zählschritt stattgefunden hat, und ein Fehlersignal auszugeben, wenn der vorangegangene Zählschritt nicht gültig war.

10. Messvorrichtung nach Anspruch 8, **dadurch gekennzeichnet, dass** der Mikroprozessor (µP) dazu ausgebildet ist, zur Erhöhung der Toleranz vor der Registrierung eines gültigen Zählschritts eine Warteschleife auszuführen, während der geprüft wird, ob weiterhin über die Steuerleitung (13) signalisiert wird, dass die Eingangsspannung, U_{E}, des ersten Spannungszählers (12) größer als die Referenzgleichspannung ist.

11. Verfahren zur Überwachung einer Mikrogeneratorschaltung (7, 10, 11) einer Drehgebervorrichtung mit den Schritten:
- Ausgeben eines Gleichspannungssignals durch die Mikrogeneratorschaltung (7, 10, 11),
- Auswerten des Gleichspannungssignals, und
- Ausgeben eines Fehlersignals, das eine Fehlfunktion der Mikrogeneratorschaltung (7, 10, 11) anzeigt, wenn die Gleichspannung unterhalb einer Referenzgleichspannung liegt.

## Claims

1. A measuring device for determining the position and / or the angle of rotation of a body which executes a translational and / or rotational motion the measuring device comprising a microgenerator circuit (7, 10, 11), which converts the kinetic energy of the body into a DC voltage; and a monitoring circuit, which is designed to output an error signal that indicates a malfunction of the microgenerator circuit (7, 10, 11), when the electrical voltage meets a predetermined criterion with respect to a reference threshold, when the DC voltage is below a reference DC voltage.

2. A measuring device in accordance with Claim 1, **characterized in that** the monitoring circuit further comprises a first voltage regulator (12), which provides an output voltage, U_{A}, based on the DC voltage.

3. A measuring device in accordance with Claim 2, **characterized in that** a second voltage regulator (20) is provided, which is designed to supply a DC voltage to the monitoring circuit; and wherein the monitoring circuit is further designed to output the error signal, based on an input voltage, U_{E}, that depends on the voltage supplied by the second voltage regulator (20) and on the voltage supplied by the microgenerator circuit (7, 10, 11).

4. A measuring device in accordance with Claim 3, **characterized in that** an output voltage, U_{A2}, supplied by the second voltage regulator, drops via a device, preferably a diode, whereby a voltage drop, U_{D}, occurs, so that a resulting DC voltage, U_{A2}-U_{D}, is supplied to the monitoring circuit.

5. A measuring device in accordance with claim 4, **characterized in that** the output voltage, U_{A2}, of the second voltage regulator (20) is greater than the reference DC voltage of the first voltage regulator (12), and wherein the resulting DC voltage, U_{A2}-U_{D}, which is supplied to the monitoring circuit, is smaller than the reference DC voltage of the first voltage regulator (12).

6. A measuring device in accordance with one of the above Claims, **characterized in that** the monitoring circuit further comprises a microprocessor (µP) and a non-volatile electronic storage medium (FeRAM), whereby the microprocessor (µP) is designed to determine a count based on the detection of the rotation of the shaft, and the non-volatile electronic storage medium (FeRAM) is designed to store the count;
the monitoring circuit further comprises a control line (13) and a write access lock (21) for the non-volatile electronic storage medium (FeRAM) and is designed to release the write access lock via control line for writing data onto the non-volatile electronic storage medium (FeRAM) only when the input voltage, U_{E}, is greater than the reference DC voltage at the input of the first voltage regulator (12), wherein the monitoring circuit is designed to calculate a difference between the current angular position and the count and to output an error signal when the difference is greater than a predetermined threshold value.

7. A measuring device in accordance with Claim 6, **characterized in that** a malfunction of the microgenerator circuit is recognized by the difference between the angular position and the count being at least 2.

8. A measuring device in accordance with one of the above Claims, **characterized in that** the microgenerator circuit (7, 10, 11), comprises a capacitor (11) for stabilizing the DC voltage.

9. A measuring device in accordance with claim 7, **characterized in that** the monitoring circuit is designed to monitor the proper execution of the program of the microprocessor (µP), by the microprocessor (µP) being designed to count a counting step per quarter rotation of the shaft, a quadrant, and to store the count in the non-volatile electronic storage medium (FeRAM) and to record for the current quadrant whether a valid counting step is carried out by checking during the entire duration of the determination of the count whether the input voltage, U_{E}, of the first voltage regulator (12), is greater than the reference DC voltage, and further to check before each new counting step whether a valid counting step has taken place in the previous quadrant, and to output an error signal when the previous counting step was not valid.

10. A measuring device in accordance with Claim 8, **characterized in that** the microprocessor (µP) is designed to execute a waiting loop for increasing the tolerance before recording a valid counting step, wherein during the waiting loop a check is made as to whether there is a further signal via the control line (13) that the input voltage, U_{E}, of the first voltage regulator (12) is greater than the reference DC voltage.

11. A process for monitoring a microgenerator circuit (7, 10, 11) of a rotary encoder device the process comprising the steps of:
- outputting a DC voltage signal, by the microgenerator circuit (7, 10, 11);
- analyzing the DC voltage signal; and
- outputting an error signal that indicates a malfunction of the microgenerator circuit (7, 10, 11), when the DC voltage is below a reference DC voltage.

## Revendications

1. Dispositif de mesure permettant de déterminer la position et/ou l'angle de rotation d'un corps qui exécute un mouvement de translation et/ou de rotation ; comprenant un circuit de micro-générateur (7, 10, 11), qui convertit l'énergie cinétique du corps en tension continue et un circuit de surveillance qui est conçu pour émettre un signal d'erreur qui indique un dysfonctionnement du circuit de micro-générateur (7, 10, 11) lorsque la tension continue est inférieure à une tension continue de référence.

2. Dispositif de mesure selon la revendication 1, **caractérisé en ce que** le circuit de surveillance comprend un premier régulateur de tension (12) qui fournit une tension de sortie U_{A} en fonction de la tension continue.

3. Dispositif de mesure selon la revendication 2, **caractérisé en ce qu'**un second régulateur de tension (20) est prévu, lequel est conçu pour fournir une tension continue au circuit de surveillance, le circuit de surveillance étant en outre conçu pour émettre le signal d'erreur, en fonction d'une tension d'entrée U_{E} qui dépend de la tension fournie par le second régulateur de tension (20) et de la tension fournie par le circuit de micro-générateur (7, 10, 11).

4. Dispositif de mesure selon la revendication 3, **caractérisé en ce qu'**une tension de sortie U_{A2} fournie par le second régulateur de tension diminue via un composant (14), de préférence une diode, une chute de tension U_{D} survenant de sorte qu'une tension continue obtenue U_{A2} -U_{D} est fournie au circuit de surveillance.

5. Dispositif de mesure selon la revendication 4, **caractérisé en ce que** la tension de sortie U_{A2} du second régulateur de tension (20) est supérieure à la tension continue de référence du premier régulateur de tension (12), et dans lequel la tension continue obtenue U_{A2} - U_{D} fournie au circuit de surveillance est inférieure à la tension continue de référence du premier régulateur de tension (12).

6. Dispositif de mesure selon l'une des revendications précédentes, **caractérisé en ce que** le circuit de surveillance comprend en outre un microprocesseur (µP) et un support de stockage électronique non volatil (FeRAM), le microprocesseur (µP) étant conçu pour déterminer un niveau de compteur en fonction de la détection de la rotation de l'axe, et le support de stockage électronique non volatil (FeRAM) étant conçu pour enregistrer le niveau du compteur, le circuit de surveillance comprenant en outre un câble de commande (13) et un dispositif de verrouillage d'accès en écriture (21) pour le support de stockage électronique non volatil (FeRAM) et étant conçu pour déconnecter le dispositif de verrouillage d'accès en écriture (21) via le câble de commande (13) pour l'écriture de données sur le support de stockage électronique non volatil (FeRAM) uniquement lorsqu'à l'entrée du premier régulateur de tension (12) la tension d'entrée U_{E} est supérieure à la tension continue de référence, le circuit de surveillance étant conçu pour calculer une différence entre la position angulaire actuelle et le niveau du compteur et pour émettre un signal d'erreur lorsque la différence est supérieure à une valeur seuil prédéterminée.

7. Dispositif de mesure selon la revendication 6, **caractérisé en ce qu'**un dysfonctionnement du circuit de micro-générateur est détecté par le fait que la différence entre la position angulaire et le niveau du compteur est au moins de 2.

8. Dispositif de mesure selon l'une des revendications précédentes, **caractérisé en ce que** le circuit de micro-générateur (7, 10, 11) comprend un condensateur (11) pour stabiliser la tension continue.

9. Dispositif de mesure selon la revendication 7, **caractérisé en ce que** le circuit de surveillance est conçu pour surveiller l'exécution correcte du programme du microprocesseur (µP), le microprocesseur (µP) étant conçu pour compter un pas de comptage par quart de tour de l'axe, du quadrant et pour l'enregistrer dans le support de stockage électronique non volatil (FeRAM) et pour l'enregistrer pour les quadrants actuels si un pas de comptage valide est effectué, en vérifiant pendant la durée totale de détermination du niveau de compteur si la tension d'entrée U_{E} du premier régulateur de tension (12) est supérieure à la tension continue de référence, et en outre pour vérifier avant chaque nouveau pas de comptage si un pas de comptage a lieu dans le quadrant précédent, et pour émettre un signal d'erreur lorsque le pas de comptage précédent n'était pas valide.

10. Dispositif de mesure selon la revendication 8, **caractérisé en ce que** le microprocesseur (µP) est conçu pour exécuter un circuit d'attente pour augmenter la tolérance avant l'enregistrement d'un pas de comptage valide, au cours duquel il est vérifié s'il est signalé par le biais du câble de commande (13) que la tension d'entrée U_{E} du premier compteur de tension (12) est supérieure à la tension continue de référence.

11. Procédé de surveillance d'un circuit de micro-générateur (7, 10, 11) d'un dispositif de codeur comprenant les étapes consistant à :
- émettre un signal de tension continue par le biais du circuit de micro-générateur (7, 10, 11),
- évaluer le signal de tension continue, et
- émettre un signal d'erreur qui indique un dysfonctionnement du circuit de micro-générateur (7, 10, 11) lorsque la tension continue est inférieure à la tension continue de référence.
